# EUROPÄISCHE PATENTSCHRIFT

(11) **EP 2 417 009 B1**
(45) Veröffentlichungstag und Bekanntmachung des Hinweises auf die Patenterteilung: **16.07.2014**
(21) Anmeldenummer: 10713628.5
(22) Anmeldetag: 08.04.2010
(51) Int. Cl.: B62D 53/08

(54) **VERFAHREN UND STEUERUNGSSYSTEM FÜR EINE SATTELKUPPLUNGSVERSCHIEBEEINRICHTUNG MIT ERFASSUNG DER KNICKSTELLUNG VON ZUGFAHRZEUGEN UND AUFLIEGER**
PROCESS UND CONTROL SYSTEM FOR A SLIDABLE FIFTH WHEEL BASED ON DETECTION OF THE ANGLE BEWTEEN TRACTOR AND TRAILER
PROCÉDÉ ET MOYEN DE CONTRÔLE D'UNE SELLETTE COULISSANTE INCLUANT UNE DETECTION DE L'ANGLE FORMÉ PAR LA SEMI-REMORQUE ET LE TRACTEUR

(30) Priorität: 09.04.2009 DE 102009002334
(43) Veröffentlichungstag der Anmeldung: 15.02.2012
(73) Patentinhaber: Jost-Werke GmbH, 63263 Neu-Isenburg (DE)
(72) Erfinder: ALGÜERA GALLEGO, José Manuel, 63739 Aschaffenburg (DE)
(74) Vertreter: Mehler Achler
(86) Internationale Anmeldenummer: PCT/EP2010/054664
(87) Internationale Veröffentlichungsnummer: WO 2010/115966

(56) Entgegenhaltungen:
- DE-A1- 10 128 141
- DE-A1-102004 046 065
- DE-A1-102007 031 318
- FR-A1- 2 625 472
- JP-A- 9 002 342
- JP-A- 2004 276 708
- US-B1- 7 549 666

## Beschreibung

Die Erfindung betrifft ein Verfahren zur Steuerung einer Verschiebeeinrichtung für eine auf einem Zugfahrzeug angeordnete Sattelkupplung gemäß der Merkmale im Oberbegriff des Patentanspruchs 1 wie im DE 10 2004 046 065 offenbart. Darüber hinaus ist ein für das Durchführen des erfindungsgemäßen Verfahrens besonders geeignetes Steuerungssystem für eine Verschiebeeinrichtung unter Schutz gestellt.

Eine andere Verschiebeeinrichtung ist beispielsweise aus der DE 10 2005 060 124 A1 bekannt geworden. Mit Hilfe einer motorischen Antriebseinheit kann ein Schlitten mit der darauf befindlichen Sattelkupplung in der Längsachse des Fahrzeugs auf zwei parallel verlaufenden Führungsschienen verfahren und in einer vorgesehenen Position verrastet werden. Bei schneller Autobahnfahrt ohne nennenswerte Kurven soll die Sattelkupplung möglichst nah an das Fahrerhaus gefahren werden, um den Spalt zwischen dem Fahrerhaus und der Aufliegerfront möglichst gering zu halten und Verwirbelungen in diesem Bereich zu minimieren. Gemäß der bekannten Druckschrift wird das Steuergerät der Verschiebeeinrichtung an das Fahrzeugsteuergerät angeschlossen, so dass Informationen bezüglich der Fahrgeschwindigkeit abgerufen werden können und somit im Regelbetrieb der Spalt zwischen Zugfahrzeug und Auflieger eingestellt werden kann. Hieraus resultiert jedoch das Problem, dass der möglichst nah an das Fahrerhaus herangezogene Auflieger bei engen Kurvenfahrten nicht ohne weiteres an dem Fahrerhaus vorbei schwenken kann, ohne mit den Ecken des Aufliegers gegen das Fahrerhaus zu schlagen. Dieses Problem soll auch bei einer Panikbremsung bestehen, das heißt einer plötzlichen Vollbremsung ohne Ausweichmanöver, die durch Auswertung eines in das Steuergerät eingehenden Bremssignals erkannt wird und eine äußerst schnelle Rückwärtsbewegung des Schlittens zum Vergrößern des Spaltmaßes auslöst.

Einen weiteren Stand der Technik offenbart die DE 10 2004 045 662 A1 mit einer Verschiebeeinrichtung, deren Schlittenposition von einem Positionssensor erfasst wird. Das Signal des Positionssensors wird einer Steuereinrichtung bereitgestellt, die bei Vorliegen eines zu geringen Spaltes zwischen Fahrerhaus und Aufliegerfront gegebenenfalls auch die Antriebseinheit der Verschiebeeinrichtung in Gang setzt und dadurch den Schlitten zurückbewegt.

In der Praxis hat sich jedoch gezeigt, dass die Erfassung des Bremssignals und der Fahrgeschwindigkeit allenfalls dazu geeignet sind, eine Panikbremsung ohne nachfolgendes Ausweichmanöver zu ermitteln. Hierbei reicht in der Regel auch bei vorgezogener Sattelkupplung der verbleibende Spalt zwischen Zugfahrzeug und Auflieger aus. Ein zeitgleiches Ausweichmanöver, das häufig zu einem Anschlagen einer Ecke des Aufliegers an das Fahrerhaus des Zugfahrzeugs führt, lässt sich mit der bekannten Vorrichtung nicht detektieren. Die Positionsbestimmung des Schlittens ist insbesondere bei starken Lastwechselreaktionen des Aufliegers aber auch im Falle von an der Frontseite des Aufliegers angeordneten Aggregaten wenig präzise, so dass ein zusätzlicher Unsicherheitsfaktor besteht, ob der Auflieger über das Heck des Zugfahrzeugs kollisionsfrei hinwegschwenken kann.

Aus diesem Grund lag der Erfindung die Aufgabe zugrunde, ein Verfahren beziehungsweise ein Steuerungssystem bereitzustellen, welches das Risiko eines Anstoßens des Aufliegers an dem Fahrerhaus des Zugfahrzeugs minimiert.

Die Aufgabe wird erfindungsgemäß durch ein Verfahren gemäß Auspruch 1 gelöst, bei dem eine Messung zum Erfassen der Knickstellung von Zugfahrzeug und Auflieger durchgeführt wird, das Signal der Messung in dem Steuergerät zu einem Steuersignal verarbeitet und damit eine Inbetriebnahme der motorischen Antriebseinheit und/oder des Stellgliedes initiiert wird.

Unter der Knickstellung wird eine abgewinkelte Position von Zugfahrzeug und Auflieger bezogen auf die Fahrzeuglängsachse verstanden. Bei den häufig verwendeten Verschiebeeinrichtungen wird der Schlitten auf zwei parallelen Führungsschienen mittels einer motorischen Antriebseinheit, wie beispielsweise einem Hydraulikzylinder, verfahren und nach Erreichen der vorgesehenen Position beidseitig an den Führungsschienen fixiert. Hierfür werden meistens mit einem Stellglied, beispielsweise einem pneumatisch oder hydraulisch beaufschlagbaren Zylinder, Blockierstücke in Richtung der Führungsschienen bewegt und jeweils formschlüssig mit dieser in Eingriff gebracht. Diese Verrastung des Schlittens auf den Führungsschienen entlastet insbesondere bei starken Bremsungen oder Kollisionen die motorische Antriebseinheit.

Anstelle einer formschlüssigen Verrastung ist es auch möglich, die motorische Antriebseinheit in ausreichender Größe zu dimensionieren und auf zusätzliche Formschlusselemente zu verzichten. Bei dieser Ausführungsform wird unter dem Stellglied ein Sperrventil verstanden, mit welchem das im Zylinderinnenraum befindliche Fluid eingeschlossen wird.

Während schneller Autobahnfahrt wird der Auflieger über die Verschiebeeinrichtung nah an das Fahrerhaus des Zugfahrzeugs herangezogen, um die Spaltweite zwischen Fahrerhaus und Aufliegerfront möglichst gering zu halten. Hierdurch werden Verwirbelungen und somit auch der Kraftstoffverbrauch minimiert. Im Falle eines plötzlichen Ausweichmanövers wird die Fixierung des Schlittens aufgehoben und der Schlitten auf den Führungsschienen zurückgedrückt. Mit Hilfe des erfindungsgemäßen Verfahrens wird unmittelbar die räumliche Position des Aufliegers überwacht, so dass bei einer Annäherung von Bereichen des Aufliegers ein Verschieben des Schlittens in eine hintere Position eingeleitet wird.

Es wird in dem Steuergerät aus dem Signal der Messung ein Winkel- oder im Falle einer Abstandsmessung ein Abstandsgradient generiert oder dieser an das Steuergerät übermittelt. Die Begriffe Winkelgradient und Abstandsgradient werden synonym benutzt und unterstreichen lediglich die Möglichkeiten unterschiedlicher Messwerterfassungen. Der Winkel- oder Abstandsgradient berücksichtigt während der Fahrt den Lenkeinschlag beziehungsweise eine Änderung des vom Sensor bereitgestellten Messwertes pro Zeiteinheit, um darüber unmittelbar das Spaltmaß einzustellen. Bei dieser Vorgehensweise wird darauf verzichtet, quantitativ auf den Betrag des aktuellen Knickwinkels zu schließen und darüber die Position der Sattelkupplung auf den Führungsschienen bestimmt. Mit Hilfe dieses Verfahrensschrittes lässt sich vorausbestimmen, ob der vom Fahrer getätigte Lenkeinschlag durch das Befahren einer lang gezogenen Kurve im regulären Fahrbetrieb oder ein plötzliches Ausweichmanöver begründet ist. Somit wird insbesondere eine Schnellverstellung im Notfall erreicht, das heißt für den Fall eines schnellen Ausweichmanövers.

Es hat sich als besonders günstig herausgestellt, in dem Steuergerät zusätzlich aus dem Bremssignal der Fahrzeugbremsanlage einen Bremsgradienten zu generieren oder diesen an das Steuergerät zu übermitteln. Der Bremsgradient dient als Kenngröße dafür, ob eine starke oder schwache Bremsung vom Fahrer eingeleitet wurde. Als Parameter kann hierfür beispielsweise der Bremsdruck oder der Pedalweg pro Zeiteinheit herangezogen werden. Der zur Verfügung stehende Pedalweg der Fahrzeugbremse kann insbesondere durch zwei Sensoren erfasst werden, die am Anfang und Ende des Pedalweges angeordnet sind. Bei einer plötzlichen Panikbremsung wird der Fahrer schnell auf das Bremspedal treten, um einen drohenden Unfall zu vermeiden. Hieraus ergibt sich eine schnelle Pedalbewegung und ein entsprechend hoher Bremsgradient.

Der Schlitten kann dann bei Überschreiten eines vorgebbaren Bremsgradienten und Unterschreiten eines vorgebbaren Winkelgradienten von dem Stellglied gesperrt werden. Dieses Szenario entspricht der Fahrsituation einer Vollbremsung ohne nennenswerte Lenkbewegung. Auch wenn der Auflieger durch Lastwechselreaktionen sich dem Fahrerhaus annähert, ist keine Kollision zu erwarten. Aus diesem Grund bleibt das Stellglied in der Sperrstellung, wobei im Falle eines formschlüssigen Eingreifens eine zusätzliche Sicherheit erreicht wird, da der Schlitten nicht ausschließlich von der motorischen Antriebseinheit gehalten ist. Das Einbeziehen der vorstehend beschriebenen Parameter kann vorzugsweise dazu genutzt werden, die relevanten Sicherheitssysteme in einen Bereitschaftsmodus zu fahren. So kann zum Beispiel die Hydraulikpumpe der motorischen Antriebseinheit hoch laufen, um vorsorglich einen ausreichend hohen Betriebsdruck zu Verfügung zu stellen.

Vorteilhafterweise wird die Sperrstellung des Schlittens bei Überschreiten eines vorgebbaren Bremsgradienten und Überschreitung des vorgebbaren Winkelgradienten von dem Stellglied aufgehoben. Bei diesem Szenario kommt bei einer Vollbremsung ein plötzliches Lenkmanöver des Fahrers hinzu, da unter Umständen ein Hindernis umfahren werden muss. Um eine Kollision der Aufliegerfront mit dem Fahrerhaus des Zugfahrzeugs zu vermeiden, muss der Schlitten auf den Führungsschienen in eine hintere Position gebracht und dadurch die Spaltweite zwischen Aufliegerfront und Fahrerhaus vergrößert werden. Hierfür ist es notwendig, die Sperrstellung des Schlittens aufzuheben.

Zweckmäßigerweise wird dem Steuergerät auch die tatsächliche Geschwindigkeit des Zugfahrzeugs bereitgestellt und unterhalb einer vorgebbaren Mindestgeschwindigkeit der Schlitten in einer hinteren Position auf der Führungsschiene beziehungsweise den Führungsschienen gehalten. Dieser Verfahrensschritt verhindert ein stetiges Bewegen des Schlittens bei geringen Fahrgeschwindigkeiten oder im Rangierbetrieb. Hier wirkt sich der Luftwiderstand ohnehin kaum aus. Darüber hinaus wird im Stillstand oder Rangierbetrieb ein unbeabsichtigtes Zurückschieben des Aufliegers und dadurch Beschädigungen an hinter dem Auflieger befindlichen Fahrzeugen, Gebäuden oder sonstigen Gegenständen vermieden.

Die Erfindung ist ebenfalls an einem Steuerungssystem gemäß Anspruch 7 verwirklicht, bei dem das Steuergerät mit mindestens einem Sensor verbunden ist, welcher einen Messwert zum Erfassen der Knickstellung von Zugfahrzeug und Auflieger bereitstellt, und mit der Antriebseinheit und/oder dem Stellglied zusammenwirkt.

Gemäß einer ersten vorteilhaften Ausführungsform ist der Sensor im Bereich des Lenksystems angeordnet und erfasst den Lenkwinkel des Zugfahrzeugs. Aus dem Lenkwinkel des Zugfahrzeugs kann dann indirekt auf die Knickstellung geschlossen werden. Diese Anordnung ist besonders bevorzugt, da zeitlich sehr früh, das heißt unmittelbar mit der Lenkbewegung, dem System ein Signal von dem Sensor zur Verfügung steht. Dabei kann der Sensor insbesondere mit dem Lenkrad und/oder dem Lenkgestänge und/oder dem Lenkgetriebe zusammenwirken.

In einer zweiten bevorzugten Ausführungsform der Erfindung ist vorgesehen, dass der Sensor den Relativwinkel zwischen Zugfahrzeug und Auflieger erfasst. Ein dafür geeigneter Sensor kann beispielsweise ein Drehwinkelgeber sein. Der Drehwinkelgeber sollte beispielsweise an oder in der Sattelkupplung angeordnet sein. Dabei kann sich ein Laufrad an der Unterseite der Aufliegerplatte abstützen und ein seitliches Auswandern des Aufliegers erkennen. Ebenso ist es möglich, die Drehbewegung des in die Sattelkupplung eingefahrenen Königszapfens zu sensieren.

Gemäß einer dritten Ausführungsform kann der Sensor ein Abstandssensor zum Erfassen der Spaltweite zwischen Fahrerhaus und Aufliegerfront sein und eine Knickstellung durch eine Verringerung der Spaltweite erkennen. Bei Geradeausfahrt decken sich die Fahrzeuglängsachse des Zugfahrzeugs und des Aufliegers. Ein zum Beispiel mittig angeordneter Abstandssensor würde einen maximalen Abstand messen. Sobald eine Kurvenfahrt eingeleitet wird, wandert die kurveninnenliegende Ecke des Aufliegers in Richtung der Längsachse des Zugfahrzeugs, so dass der Abstandssensor einen verringerten Abstand zwischen Fahrerhaus und Aufliegerfront misst.

Die vorstehend beschriebene Ausführungsform liefert einen besonders direkten Messwert, der besonders gut die tatsächlichen räumlichen Gegebenheiten wiedergibt. Darüber hinaus kann die beschriebene Verwendung eines Abstandssensors dazu genutzt werden, auch im Regelbetrieb einen Mindestabstand zwischen Fahrerhaus und Zugfahrzeug einzuhalten.

Vereinzelt kann es bei Aufliegern vorkommen, dass der Abstand vom Königszapfen bis zur Aufliegerfront sehr lang dimensioniert ist und unter Umständen zudem noch zusätzliche Aggregate an der Aufliegerfront installiert sind. In diesen Fällen verhindert der Abstandssensor, dass der Auflieger im regulären Fahrbetrieb bei schneller Autobahnfahrt bis gegen das Fahrerhaus gezogen wird.

Zweckmäßigerweise berechnet das Steuergerät aus der Änderung des Messwertes pro Zeiteinheit einen Winkel- oder im Falle der vorstehend beschriebenen dritten Ausführungsform einen Abstandsgradienten.

Darüber hinaus hat es sich als günstig erwiesen, wenn das Steuergerät mit dem Bremssystem des Zugfahrzeugs verbunden ist und aus dem Bremssystem einen Bremsgradienten erhält oder diesen generiert.

Vorteilhafterweise ist der Schlitten bei Überschreiten eines vorgebbaren Bremsgradienten und Unterschreiten eines vorgebbaren Winkelgradienten von dem Stellglied gesperrt.

Vorzugsweise ist die Sperrstellung des Schlittens bei Überschreiten eines vorgebbaren Bremsgradienten und Überschreiten eines vorgebbaren Winkelgradienten aufgehoben.

Zum besseren Verständnis wird die Erfindung nachfolgend anhand von 6 Figuren näher erläutert. Es zeigen dabei die:
- **Fig. 1:**: eine Seitenansicht auf ein Zugfahrzeug mit einer Verschiebeeinrichtung und angekuppeltem Auflieger gemäß des Standes der Technik;
- **Fig. 2:**: eine Unteransicht auf die in Figur 1 dargestellte Verschiebeeinrichtung;
- **Fig. 3:**: eine schematische Seitenansicht auf eine erste Ausführungsform des erfindungsgemäßen Steuerungssystems;
- **Fig. 4:**: eine schematische Seitenansicht auf eine zweite Ausführungsform des erfindungsgemäßen Steuerungssystems;
- **Fig. 5:**: eine schematische Seitenansicht auf eine dritte Ausführungsform des erfindungsgemäßen Steuerungssystems und
- **Fig. 6:**: eine schematische Seitenansicht auf das in Figur 5 gezeigte Steuerungssystem.

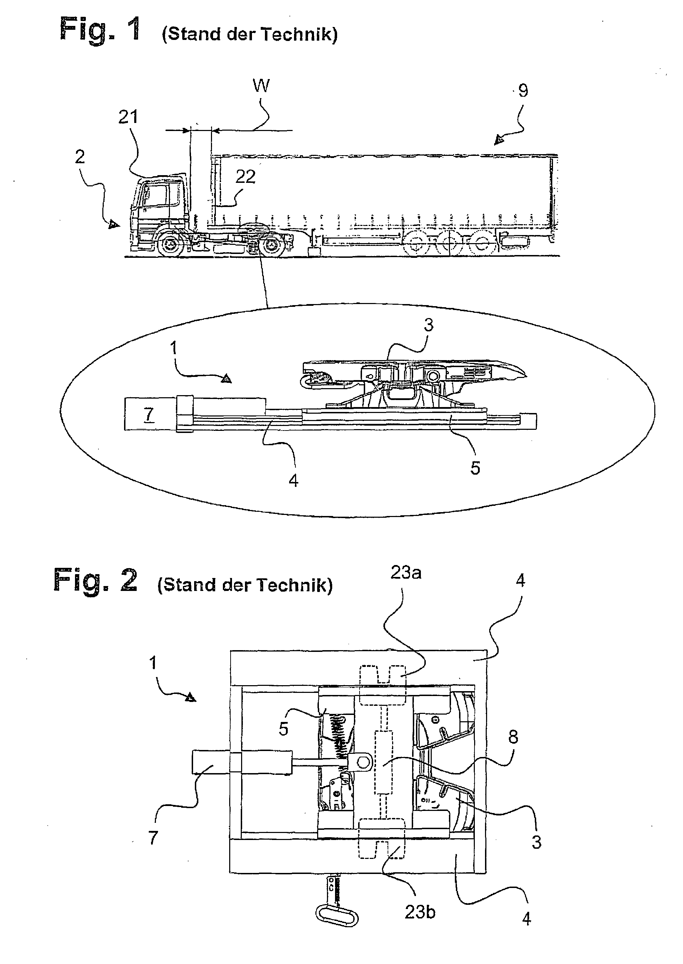

Die Figur 1 zeigt in einer schematischen Seitenansicht einen Sattelzug mit einem Zugfahrzeug 2 und einen daran mechanisch angekuppelten Auflieger 9. Die mechanische Verbindung zwischen den Fahrzeugen 2, 9 erfolgt über eine Sattelkupplung 3, die auf einem Schlitten 5 angeordnet ist und in der Fahrzeuglängsachse auf zwei parallel zueinander beabstandeten Führungsschienen 4 verfahren werden kann. Das Verfahren der Sattelkupplung 3 erfolgt während des Fahrbetriebes über eine eigens dafür vorgesehene mechanische Antriebseinheit 7 in Form eines Hydraulikzylinders und dient in erster Linie dem Einstellen der Spaltweite W zwischen der Rückseite des Fahrerhauses 21 und der Aufliegerfront 22.

Die Verschiebeeinrichtung 1 ist in einer vergrößerten Unteransicht in Figur 2 zu erkennen. Auf dem Schlitten 5 befindet sich rechtwinklig zu den Führungsschienen 4 ein Stellglied 8 mit endseitig daran ausgebildeten Blockierstücken 23a, 23b, die in komplementäre Aufnahmen (nicht gezeigt) der Führungsschienen 4 formschlüssig eingreifen und dadurch den Schlitten 5 an den Führungsschienen 4 verriegeln. Vor einem Verfahren des Schlittens 5 mit der motorischen Antriebseinheit 7 werden die Blockierstücke 23a, 23b über das Stellglied 8 zurückgefahren, wodurch die mechanische Verrastung aufgehoben wird.

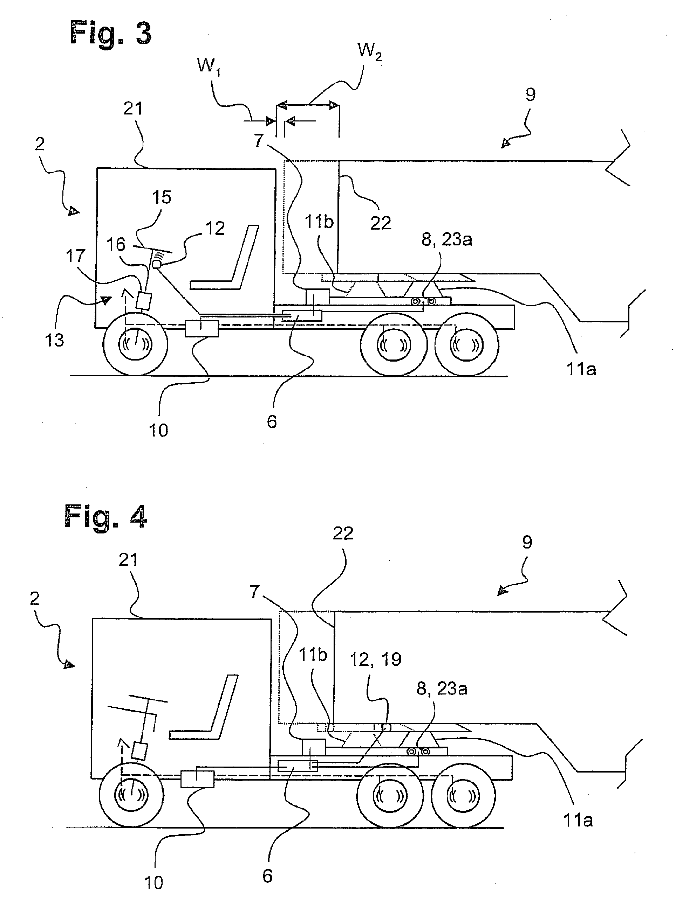

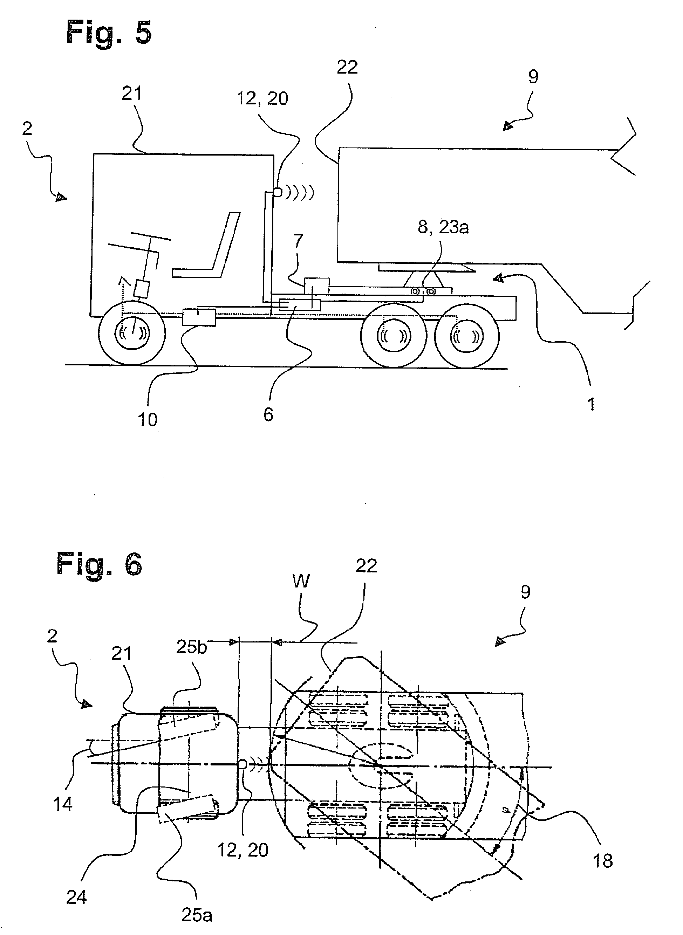

Eine erste Ausführungsform der Erfindung ist in Figur 3 dargestellt. Hierbei wird im Fahrerhaus 21 das dem Lenksystem 13 zugeordnete Lenkrad 15 über einen Sensor 12 überwacht und dadurch ein Lenkeinschlag beziehungsweise eine Änderung des Lenkwinkels 14 (siehe Figur 6) erkannt. Alternativ könnte der Sensor 12 auch die Lenkstange 16 oder Teile des Lenkgetriebes 17 detektieren. Der Sensor 12 ist an ein elektronisches Steuergerät 6 angeschlossen, welches außerdem mit der motorischen Antriebseineinheit 7 und dem Stellglied 8 verbunden ist. Mit Hilfe des Steuergerätes 6 und des Sensors 12 wird indirekt auf die Knickstellung des Aufliegers 9 gegenüber dem Zugfahrzeug 2 geschlossen.

In der Figur 3 ist eine hintere Position 11 a sowie eine vordere Position 11 b des Schlittens 5 und somit der Aufliegerfront 22 zu erkennen, wobei aus Übersichtsgründen die vordere Position 11 b mit gepunkteten Linien versehen ist. Mit der vorderen Position 11 b korrespondiert die minimale Spaltweite W₁ und mit der hinteren Position 11 a die maximale Spaltweite W₂. Die minimale Spaltweite W₁ ist dabei derart bemessen, dass ein vollständiges Schwenken der Aufliegerfront 22 ohne Kollision mit dem Fahrerhaus 21 nicht möglich wäre.

Ausgehend von der bei hoher Geschwindigkeit eingestellten minimalen Spaltweite W₁ wird im Falle eines Lenkeinschlages dieser von dem Sensor 12 erkannt und dem Steuergerät 6 als Messwert zur Verfügung gestellt. In Abhängigkeit des Winkelgradienten, das heißt des Lenkeinschlages pro Zeiteinheit, wird bei Überschreiten eines vorgebbaren Lenkgradienten das Stellglied 8 zurückgefahren und dadurch die Verrastung des Schlittens 5 aufgehoben. Anschließend drückt die motorische Antriebseinheit 7 den Schlitten in die hintere Position 11a zurück, um eine maximale Spaltweite W₂ herzustellen.

Eine zusätzliche Systemsicherheit wird erzielt, wenn zusätzlich Signale der Fahrzeugbremsanlage 10 berücksichtigt werden. Dabei kann das Steuergerät 6 bei ausschließlichem Vorhandensein eines Bremssignals die Fixierung des Schlittens 5 belassen und zusätzlich die motorische Antriebseinrichtung 7 und das Stellglied 8 in einen Bereitschaftsmodus versetzen.

Eine alternative Erfassung der Knickstelle erfolgt in dem Steuerungssystem gemäß der Figur 4. Hierbei wird als Sensor 12 ein in der Kontur der Sattelkupplung eingesetzter Drehwinkelgeber 19 verwendet, um ein Verschwenken des Aufliegers 9 gegenüber dem Zugfahrzeug 2 zu detektieren. Der Drehwinkelgeber 19 ist unmittelbar an das Steuergerät 6 angeschlossen, welches wiederum aus dem bereitgestellten Signal indirekt auf eine Knickstellung des Aufliegers 9 gegenüber dem Zugfahrzeug 2 entsprechend dem Relativwinkel 18 (siehe Figur 6) schließt.

Die Figuren 5 und 6 zeigen eine weitere alternative Ausführungsform der Erfindung, bei welcher der Sensor 12 aus einem an der Rückwand des Fahrerhauses 21 angeordneten Abstandssensor 20 gebildet ist. Sofern ein einziger Abstandssensor 20 zum Einsatz kommt, sollte dieser, wie in Figur 6 besonders gut erkennbar, mittig im Bereich der Fahrzeuglängsachse des Zugfahrzeugs 2 angeordnet sein.

Die Figur 6 zeigt das Ende einer Kurvenfahrt, wobei die Räder 25a, 25b der Vorderachse 24 gegenüber der Geradeausfahrt unter einem Lenkwinkel 14 eingelenkt sind. Die kurveninnere Ecke der Aufliegerfront 22 befindet sich im Bereich der Fahrzeuglängsachse des Zugfahrzeugs 2 und steht somit unmittelbar dem Abstandssensor 20 gegenüber. In dieser Stellung misst der Abstandssensor 20 die geringste mögliche Spaltweite W. Bei anschließender Geradeausfahrt und einem Zurückschwenken des Aufliegers 9 zeigt der Abstandssensor 20 die größte mögliche Spaltweite W an. Bei Kurvenfahrten in die gegenüberliegende Richtung nimmt die vom Abstandssensor 20 erfasste Spaltweite W in gleicher Weise ab.

Das Steuergerät 6 ermittelt somit aus dem Messwert des Abstandssensors 20 indirekt eine Knickstellung entsprechend dem Relativwinkel 18 von Auflieger 9 und Zugfahrzeug 2.

### Bezugszeichenliste

- 1: Verschiebeeinrichtung
- 2: Zugfahrzeug
- 3: Sattelkupplung
- 4: Führungsschiene
- 5: Schlitten
- 6: Steuergerät
- 7: motorische Antriebseinheit
- 8: Stellglied
- 9: Auflieger
- 10: Fahrzeugbremsanlage, Bremssystem
- 11a: hintere Position Schlitten
- 11b: vordere Position Schlitten
- 12: Sensor
- 13: Lenksystem
- 14: Lenkwinkel
- 15: Lenkrad
- 16: Lenkstange
- 17: Lenkgetriebe
- 18: Relativwinkel
- 19: Drehwinkelgeber
- 20: Abstandssensor
- 21: Fahrerhaus
- 22: Aufliegerfront
- 23a, b: Blockierstück Stellglied
- 24: Vorderachse
- 25a, b: Rad
- W: Spaltweite Zugfahrzeug/Auflieger
- W₁: minimale Spaltweite
- W₂: maximale Spaltweite

## Patentansprüche

1. Verfahren zur Steuerung einer Verschiebeeinrichtung (1) für eine auf einem Zugfahrzeug (2) angeordnete Sattelkupplung (3), wobei die Verschiebeeinrichtung (1) einen Unterbau mit in Fahrtrichtung ausgerichteten Führungsschienen (4), einen verfahrbaren Schlitten (5), welcher die Sattelkupplung (3) trägt und an den Führungsschienen (4) angreift, sowie ein Steuergerät (6) umfasst, an welches eine motorische Antriebseinheit (7) zum Verfahren des Schlittens (5) und ein Stellglied (8) zum Fixieren des Schlittens (5) gegenüber den Führungsschienen (4) angeschlossen sind, bei dem eine Messung zum Erfassen der Knickstellung von Zugfahrzeug (2) und Auflieger (9) durchgeführt wird, das Signal der Messung in dem Steuergerät (6) zu einem Steuersignal verarbeitet und damit eine Inbetriebnahme der motorischen Antriebseinheit (7) und/oder des Stellgliedes (8) initiiert wird,
**dadurch gekennzeichnet,**
**dass** im Falle eines plötzlichen Ausweichmanövers die Fixierung des Schlittens (5) aufgehoben und der Schlitten (5) auf den Führungsschienen (4) zurückgedrückt wird, wobei in dem Steuergerät (6) aus dem Signal der Messung ein Winkel- oder Abstandsgradient generiert oder dieser an das Steuergerät (6) übermittelt wird.

2. Verfahren nach Anspruch 1, **dadurch gekennzeichnet, dass** in dem Steuergerät (6) aus dem Bremssignal der Fahrzeugbremsanlage (10) ein Bremsgradient generiert oder ein Bremsgradient aus der Fahrzeugbremsanlage verarbeitet wird.

3. Verfahren nach Anspruch 2, **dadurch gekennzeichnet, dass** der Schlitten (5) bei Überschreiten eines vorgebbaren Bremsgradienten und Unterschreiten eines vorgebbaren Winkelgradienten von dem Stellglied (8) gesperrt wird.

4. Verfahren nach Anspruch 2 oder 3, **dadurch gekennzeichnet, dass** die Sperrstellung des Schlittens (5) bei Überschreiten eines vorgebbaren Bremsgradienten und Überschreitung des vorgebbaren Winkelgradienten von dem Stellglied (8) aufgehoben wird.

5. Verfahren nach Anspruch 4, **dadurch gekennzeichnet, dass** der Schlitten (5) nach Aufheben der Sperrstellung von der Antriebseinheit (7) in eine hintere Position (11a) verschoben wird.

6. Verfahren nach einem der Ansprüche 1 bis 5, **dadurch gekennzeichnet, dass** dem Steuergerät (6) die tatsächliche Geschwindigkeit des Zugfahrzeugs (2) bereitgestellt und unterhalb einer vorgebbaren Mindestgeschwindigkeit der Schlitten (5) in einer hinteren Position (11a) auf der/den Führungsschiene(n) (4) gehalten wird.

7. Steuerungssystem zum Durchführen des Verfahrens nach einem der Ansprüche 1 bis 6 mit einer Verschiebeeinrichtung (1) für eine auf einem Zugfahrzeug (2) angeordnete Sattelkupplung (3), wobei die Verschiebeeinrichtung (1) einen Unterbau mit in Fahrtrichtung ausgerichteten Führungsschiene (4), einen verfahrbaren Schlitten (5), welcher die Sattelkupplung (3) trägt und an den Führungsschienen (4) angreift, sowie ein Steuergerät (6) umfasst, an welches eine motorische Antriebseinheit (7) zum Verfahren des Schlittens (5) und ein Stellglied (8) zum Fixieren des Schlittens (5) gegenüber den Führungsschienen (4) angeschlossen sind, wobei das Steuergerät (6) mit mindestens einem Sensor (12) verbunden ist, welcher einen Messwert zum Erfassen der Knickstellung von Zugfahrzeug (2) und Auflieger (9) bereitstellt, und mit der Antriebseinheit (7) und/oder dem Stellglied (8) zusammenwirkt,
**dadurch gekennzeichnet,**
**dass** im Falle eines plötzlichen Ausweichmanövers die Fixierung des Schlittens (5) aufgehoben und der Schlitten (5) auf den Führungsschienen (4) zurückgedrückt wird, wobei das Steuergerät (6) aus der Änderung des Messwertes pro Zeiteinheit einen Winkel- oder Abstandsgradienten berechnet.

8. Steuerungssystem nach Anspruch 7, **dadurch gekennzeichnet, dass** der Sensor (12) im Bereich des Lenksystems (13) angeordnet ist und den Lenkwinkel (14) des Zugfahrzeugs (2) erfasst.

9. Steuerungssystem nach Anspruch 7 oder 8, **dadurch gekennzeichnet, dass** der Sensor (12) mit dem Lenkrad (15) und/oder der Lenkstange (16) und/oder dem Lenkgetriebe (17) zusammenwirkt.

10. Steuerungssystem nach Anspruch 7, **dadurch gekennzeichnet, dass** der Sensor (12) den Relativwinkel (18) zwischen Zugfahrzeug (2) und Auflieger (9) erfasst.

11. Steuerungssystem nach Anspruch 10, **dadurch gekennzeichnet, dass** der Sensor (12) ein Drehwinkelgeber (19) ist.

12. Steuerungssystem nach Anspruch 7, **dadurch gekennzeichnet, dass** der Sensor (12) ein Abstandssensor (20) zum Erfassen der Spaltweite (W) zwischen Fahrerhaus (20) und Aufliegerfront (22) ist und eine Knickstellung durch eine Verringerung der Spaltweite (W) erkennt.

13. Steuerungssystem nach einem der Ansprüche 7 bis 12, **dadurch gekennzeichnet, dass** das Steuergerät (6) mit dem Bremssystem (10) des Zugfahrzeugs (2) verbunden ist und aus dem Bremssystem (10) einen Bremsgradienten erhält oder diesen generiert.

14. Steuerungssystem nach Anspruch 13, **dadurch gekennzeichnet, dass** der Schlitten (5) bei Überschreiten eines vorgebbaren Bremsgradienten und Unterschreiten eines vorgebbaren Winkelgradienten von dem Stellglied (8) gesperrt ist.

15. Steuerungssystem nach Anspruch 14 oder 15, **dadurch gekennzeichnet, dass** die Sperrstellung des Schlittens (5) bei Überschreiten eines vorgebbaren Bremsgradienten und Überschreiten eines vorgebbaren Winkelgradienten aufgehoben ist.

## Claims

1. Method for controlling a sliding device (1) for a fifth wheel coupling (3) arranged on a towing vehicle (2), wherein the sliding device (1) comprises a substructure having guide rails (4) oriented in the driving direction, a movable slide (5), which supports the fifth wheel coupling (3) and engages on the guide rails (4), and a control unit (6), to which a motorized drive unit (7) for moving the slide (5) and an actuator (8) for fixing the slide (5) with respect to the guide rails (4) are connected, in which a measurement is performed to detect the bent position of the towing vehicle (2) and the trailer (9), the signal of the measurement is processed in the control unit (6) to produce a control signal and a start-up of the motorized drive unit (7) and/or of the actuator (8) is initiated using said signal,
**characterized in that,**
in the case of a sudden evasion manoeuvre, the fixing of the slide (5) is cancelled and the slide (5) is pushed back on the guide rails (4), wherein, in the control unit (6), an angle gradient or distance gradient is generated from the signal of the measurement or the latter gradient is transmitted to the control unit (6).

2. Method according to claim 1, **characterized in that,** in the control unit (6), a braking gradient is generated from the braking signal of the vehicle braking system (10) or a braking gradient is processed from the vehicle braking system.

3. Method according to claim 2, **characterized in that** the slide (5) is blocked by the actuator (8) when a prescribable braking gradient is exceeded and when a prescribable angle gradient is fallen below.

4. Method according to claim 2 or 3, **characterized in that** the blocked position of the slide (5) is cancelled by the actuator (8) when a prescribable braking gradient is exceeded and when a prescribable angle gradient is exceeded.

5. Method according to claim 4, **characterized in that,** after the blocked position has been cancelled, the slide (5) is moved into a rear position (11a) by the drive unit (7).

6. Method according to claims 1 to 5, **characterized in that** the actual speed of the towing vehicle (2) is provided to the control unit (6) and the slide (5) is held in a rear position (11 a) on the guide rail(s) (4) below a prescribable minimum speed.

7. Control system for carrying out the method according to one of claims 1 to 6 having a sliding device (1) for a fifth wheel coupling (3) arranged on a towing vehicle (2), wherein the sliding device (1) comprises a substructure having guide rails (4) oriented in the driving direction, a movable slide (5), which supports the fifth wheel coupling (3) and engages on the guide rails (4), and a control unit (6), to which a motorized drive unit (7) for moving the slide (5) and an actuator (8) for fixing the slide (5) with respect to the guide rails (4) are connected, wherein the control unit (6) is connected to at least one sensor (12) which provides a measurement to detect the bent position of the towing vehicle (2) and the trailer (9), and interacts with the drive unit (7) and/or the actuator (8),
**characterized in that,**
in the case of a sudden evasion manoeuvre, the fixing of the slide (5) is cancelled and the slide (5) is pushed back on the guide rails (4), wherein the control unit (6) calculates an angle gradient or distance gradient from the change in the measurement per unit of time.

8. Control system according to claim 7, **characterized in that** the senor (12) is arranged in the area of the steering system (13) and detects the steering angle (14) of the towing vehicle (2).

9. Control system according to claim 7 or 8, **characterized in that** the sensor (12) interacts with the steering wheel (15) and/or the steering rod (16) and/or the steering gear (17).

10. Control system according to claim 7, **characterized in that** the sensor (12) detects the relative angle (18) between the towing vehicle (2) and the trailer (9).

11. Control system according to claim 10, **characterized in that** the sensor (12) is a rotary encoder (19).

12. Control system according to claim 7, **characterized in that** the sensor (12) is a distance sensor (20) for detecting the width of the gap (W) between the driver's cab (20) and the trailer front (22) and recognizes a bent position through a reduction in the width of the gap (W).

13. Control system according to claims 7 to 12, **characterized in that** the control unit (6) is connected to the braking system (10) of the towing vehicle (2) and receives a braking gradient from the braking system (10) or generates this gradient.

14. Control system according to claim 13, **characterized in that** the slide (5) is blocked by the actuator (8) when a prescribable braking gradient is exceeded and when a prescribable angle gradient is fallen below.

15. Control system according to claim 14 or 15, **characterized in that** the blocked position of the slide (5) is cancelled when a prescribable braking gradient is exceeded and when a prescribable angle gradient is exceeded.

## Revendications

1. Procédé de commande d'un dispositif coulissant (1) pour une sellette d'attelage (3) disposée sur un véhicule tracteur (2), lequel dispositif coulissant (1) comprend une base avec des rails de guidage (4) orientés dans la direction de marche, un chariot (5) mobile qui porte la sellette d'attelage (3) et est en prise avec les rails de guidage (4) ainsi qu'un appareil de commande (6) auquel sont raccordés une unité d'entraînement à moteur (7) pour le déplacement du chariot (5) et un organe d'actionnement (8) pour immobiliser le chariot (5) par rapport aux rails de guidage (4), lequel procédé consiste à effectuer une mesure pour détecter le désalignement du véhicule tracteur (2) et de la semi-remorque (9), à traiter le signal de la mesure dans l'appareil de commande (6) pour produire un signal de commande et à initier avec celui-ci une mise en service de l'unité d'entraînement à moteur (7) et/ou de l'organe d'actionnement (8),
**caractérisé en ce**
**qu'**en cas de manoeuvre d'évitement soudaine, l'immobilisation du chariot (5) est supprimée et le chariot (5) repoussé sur les rails de guidage (4), un gradient d'angle ou de distance étant généré dans l'appareil de commande (6) à partir du signal de la mesure ou étant transmis à l'appareil de commande (6).

2. Procédé selon la revendication 1, **caractérisé en ce qu'**un gradient de freinage est généré dans l'appareil de commande (6) à partir du signal de freinage du système de freinage du véhicule (10) ou un gradient de freinage provenant du système de freinage du véhicule est traité.

3. Procédé selon la revendication 2, **caractérisé en ce qu'**en cas de dépassement d'un gradient de freinage prédéfinissable et de sous-dépassement d'un gradient d'angle prédéfinissable, le chariot (5) est bloqué par l'organe d'actionnement (8).

4. Procédé selon la revendication 2 ou 3, **caractérisé en ce que** le blocage du chariot (5) est supprimé par l'organe d'actionnement (8) en cas de dépassement d'un gradient de freinage prédéfinissable et de dépassement du gradient d'angle prédéfinissable.

5. Procédé selon la revendication 4, **caractérisé en ce qu'**après suppression du blocage, le chariot (5) est déplacé dans une position arrière (11 a) par l'unité d'entraînement (7).

6. Procédé selon l'une des revendications 1 à 5, **caractérisé en ce que** la vitesse réelle du véhicule tracteur (2) est fournie à appareil de commande (6) et le chariot (5) est maintenu dans une position arrière (11a) sur le(s) rail(s) de guidage (4) au-dessous d'une vitesse minimale prédéfinissable.

7. Système de commande pour exécuter le procédé selon l'une des revendications 1 à 6, avec un dispositif coulissant (1) pour une sellette d'attelage (3) disposée sur un véhicule tracteur (2), lequel dispositif coulissant (1) comprend une base avec des rails de guidage (4) orientés dans la direction de marche, un chariot (5) mobile qui porte la sellette d'attelage (3) et est en prise avec les rails de guidage (4) ainsi qu'un appareil de commande (6) auquel sont raccordés une unité d'entraînement à moteur (7) pour le déplacement du chariot (5) et un organe d'actionnement (8) pour immobiliser le chariot (5) par rapport aux rails de guidage (4), l'appareil de commande (6) étant relié à au moins un capteur (12) qui fournit une valeur de mesure pour détecter le désalignement du véhicule tracteur (2) et de la semi-remorque (9) et qui coopère avec l'unité d'entraînement (7) et/ou l'organe d'actionnement (8), **caractérisé en ce**
**qu'**en cas de manoeuvre d'évitement soudaine, l'immobilisation du chariot (5) est supprimée et le chariot (5) repoussé sur les rails de guidage (4), l'appareil de commande (6) calculant un gradient d'angle ou de distance à partir de la variation de la valeur de mesure par unité de temps.

8. Système de commande selon la revendication 7, **caractérisé en ce que** le capteur (12) est disposé au niveau du système de direction (13) et détecte l'angle de braquage (14) du véhicule tracteur (2).

9. Système de commande selon la revendication 7 ou 8, **caractérisé en ce que** le capteur (12) coopère avec le volant (15) et/ou la colonne de direction (16) et/ou le boîtier de direction (17).

10. Système de commande selon la revendication 7, **caractérisé en ce que** le capteur (12) détecte l'angle relatif (18) entre véhicule tracteur (2) et semi-remorque (9).

11. Système de commande selon la revendication 10, **caractérisé en ce que** le capteur (12) est un transmetteur d'angle de rotation (19).

12. Système de commande selon la revendication 7, **caractérisé en ce que** le capteur (12) est un capteur de distance (20) pour détecter la largeur de fente (W) entre cabine de conduite (20) et face avant de semi-remorque (22) et reconnaît un désalignement par une diminution de la largeur de fente (W).

13. Système de commande selon l'une des revendications 7 à 12, **caractérisé en ce que** l'appareil de commande (6) est relié au système de freinage (10) du véhicule tracteur (2) et reçoit du système de freinage (10) un gradient de freinage ou génère celui-ci.

14. Système de commande selon la revendication 13, **caractérisé en ce qu'**en cas de dépassement d'un gradient de freinage prédéfinissable et de sous-dépassement d'un gradient d'angle prédéfinissable, le chariot (5) est bloqué par l'organe d'actionnement (8).

15. Système de commande selon la revendication 14 ou 15, **caractérisé en ce que** le blocage du chariot (5) est supprimé en cas de dépassement d'un gradient de freinage prédéfinissable et de dépassement d'un gradient d'angle prédéfinissable.
